# EUROPEAN PATENT SPECIFICATION

(11) **EP 2 786 853 B1**
(45) Date of publication and mention of the grant of the patent: **13.10.2021**
(21) Application number: 14162754.7
(22) Date of filing: 31.03.2014
(51) Int. Cl.: B29C 48/60, B29C 48/53, B29C 48/535, B29B 7/42, B29K 7/00

(54) **DECOMPRESSION SCREW FOR PROCESSING RUBBER COMPOUNDS**
DEKOMPRIMIERUNGSSCHNECKE ZUR GUMMIMISCHUNGSVERARBEITUNG
VIS DE DÉCOMPRESSION POUR TRAITEMENT DE COMPOSÉS DE CAOUTCHOUC

(30) Priority: 02.04.2013 SK 572013 U
(43) Date of publication of application: 08.10.2014
(73) Proprietor: Konstrukta-TireTech, a.s., 911 01 Trencin (SK)
(72) Inventor: Kaprálik, Mário, 020 01 Púchov (SK); Sedivý, Vladimír, 913 32 Dolná Sú a (SK); Kurinec, Pavol, 018 41 Dubnica nad Váhom (SK); Malek, Lubomír, 020 01 Púchov (SK)

(56) References cited:
- CN-A- 101 619 139
- CN-A- 102 886 889
- CN-U- 202 727 310
- JP-A- 2001 162 670
- JP-A- 2002 154 148
- JP-A- 2005 262 824
- JP-U- H 036 917
- JP-U- S58 115 320
- US-A- 3 577 494
- US-A- 3 664 795
- US-A- 4 129 386

## Description

### BACKGROUND OF THE INVENTION

### Field of the Invention

The present invention relates to a cold feed pin type extruder decompression screw, for rubber compounds processing.

### Description of Prior Art

Rubber compounds extrusion machine screws serves for material conveying from the feeding section of the extrusion machine to the forming part, where the wanted shape for next processing operations is acquired. Extrusion machines can be split into the two groups, with regards to the fed rubber compound temperature. Cold feed, when the fed rubber compound temperature is close to the ambient temperature, and hot feed with fed rubber compound temperature higher than the ambient temperature.

Cold feed process includes additional homogenization, which can be increased by mixing elements, for example mixing pins intruded to the screw channel area.

Generally, screws with constant core diameter and constant helix pitch in cold feed pin types extrusion machines are used. In case of no high extruded profile temperature risk, compression screw design can be used, characterized by ratio of the channel volume in melting and metering section near the feeding section to the channel volume at the end of the melting and metering section larger than one. There is no special screw design for rubber compounds typical by high heat development during extrusion processing, to reduce the heat.

There are more screw designs with dimensions of helix pitch or core diameter change in different screw sections, solving problems during polymers extrusion, but most of them are especially developed for polymers, which requires different processing conditions during extrusion, than rubber compounds, elastomer based.

Some of these designs are used for mixing or incorporation of different materials into the polymer melt, for example Patent US 3 577 494 A describes method of processing resinous materials, thermoplastics and extrudable thermosetting materials, used for filamentary reinforcement incorporation. Extruder screw design is subject to prevention of filaments degradation and incorporation to the plastics material. In case of rubber compounds extrusion in form of slab feeding would be problematic, due to decompression just from the feeding section, thus continual feeding of the melting and metering section with bulk creation in feeding section is problematic. In case of usage in extruder, additional pressure creation elements are added. Very low compression ratio, out of rubber compound usable range will cause unstable profile extrusion regarding dimensions and weight. Patent CN 101 619 139 A is solving production process of polystyrene polyfoam and incorporating of supercritical carbon dioxide as a blowing agent to the melted polymer. Screw design undergoes to the given mixing requirements and creation of proper processing conditions.

S. Heinz (US 3 664 795 A) describes screw extruder for high viscosity thermoplastic melts extrusion with changing core diameter and helix pitch, but with resulting compression ratio of the melting and metering section equal one or larger than one. Patent JP 2005 262 824 A describes extrusion screw for resin extrusion, which can mold an article colored in pattern, consists of feed zone, compression zone and metering zone which has a heating zone for heating a resin while suppressing mixing of a resin. Heating is provided with increasing of gap between barrel surface and screw and changing of flight height and helix pitch. Screw design, used for rubber compounds extrusion in patent CN 102 886 889 A shows changing compression ratio, provided by regular tapered body 0,5 to 2 degrees, while the barrel bore is tapered too. This screw reaches compression ratio 8:1 and is used for compacting during cable insulation.

CN202727310 the utility model describes a different-diameter extrusion screw of a cold-feed exhausting extruder. The different-diameter extrusion screw of the cold-feed exhausting extruder comprises a double-stage screw or a multi-stage screw, wherein the outer diameters of screw threads of a working section comprising the double-stage screw or the multi-stage screw vary by stages so as to achieve capacity balance. The ratio of the outer thread diameter of the working section of the cold feed screw to the outer thread diameter of the working section of the hot feed screw is 0.5 to 0.7.

### SUMMARY OF THE INVENTION

It is a task of the present invention to solve problems occurring during temperature sensitive rubber compounds extrusion processing by creation of proper conditions to decrease melt pressure inside the extruder, thus decrease the heat development as a related process during melt homogenization and compression.

Within this technical task, the present invention aims at designing of the screw features in terms of decompression characteristics obtaining. Material in form of rubber compound slab with ambient temperature, incoming in to the extrusion screw feeding section of the extrusion machine consists of two or more flight, is at the beginning compressed by geometry given by ratio of the channel volume in feeding section to the channel volume at the beginning of the melting and metering section larger than one. This ensures continual feeding and lower air bubbles infiltration in to the fed compound, and heat developed during this process positively influences homogenization being running. Subsequently, rubber compound enters to the melting and metering section, where the screw core diameter in direction from the feeding section to the end of the melting and metering section is decreasing, and/or helix pitch in melting and metering section in direction from feeding section to the end of the melting and metering section is increasing, and channel volume in melting and metering section near the feeding section to the channel volume at the end of the melting and metering section is in range between 0,8 and 1.

By the proper combination of the screw core diameter and helix pitch, pressure of the rubber compound is being positively affected. This way, rheological and thermodynamical properties of the rubber compound are utilized, that means with pressure decreasing heat development decreases too, and vice versa.

Invented screw design can be used for any screw diameter.

### BRIEF DRAWING DESCRIPTION

FIG. 1 shows decompression screw for rubber compounds processing with six flight feeding section with sections definition.
FIG. 2 shows related design of decompression screw for rubber compounds processing with two flight feeding section.

### DETAILED DESCRIPTION OF THE INVENTION

### Example 1:

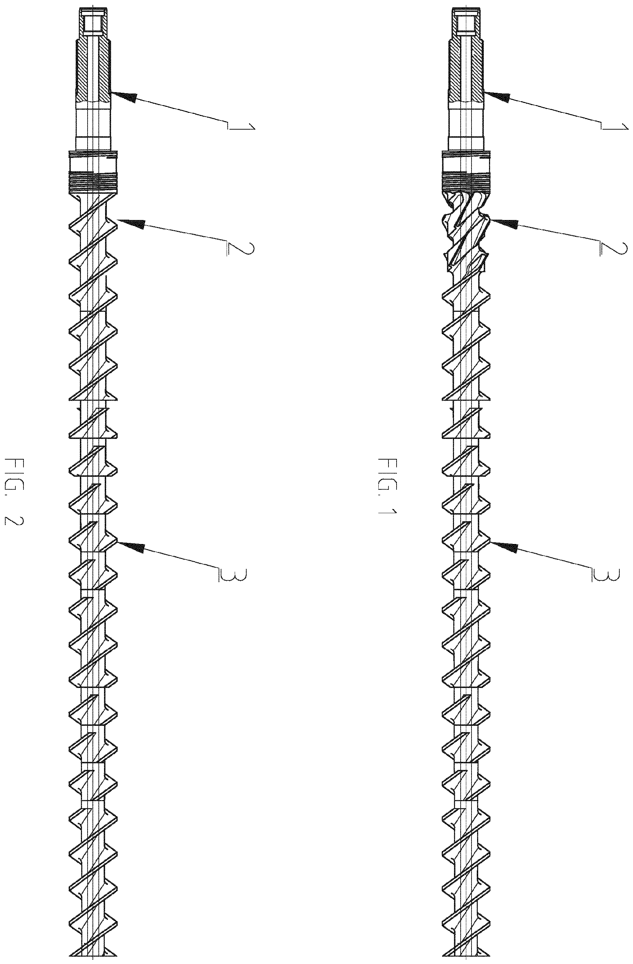

This way of carrying out the invention describes decompression screw for rubber compounds processing with reference to the FIG. 1.

Extrusion screw is fixed by screw shank 1 into the not shown extrusion machine gearbox. Helix of the feeding section 2 is created by six flight on the constant diameter core. This six flight helix is created by two kinds of helixes with different angle in range between 20° and 60°, while core diameter of the feeding section is equal to the core diameter on the beginning of the melting and metering section 3. Melting and metering section 3 helix is created by two flight helix with angle in range between 19° and 32°, while core diameter in direction from feeding section 2 is changing in range between 0,42 x (times) screw diameter to 0,58 x (times) screw diameter, and core diameter from the feeding section 2 is larger than the core diameter at the end of the melting and metering section 3. By combination of the screw core diameter and/or helix pitch change in melting and metering zone 3, in mentioned ranges is resulting channel volume in melting and metering section 3 near the feeding section 2 to the channel volume at the end of the melting and metering section 3 ratio in range between 0,8 and 1. Such a decompression screw design is proper for rubber compounds extrusion, especially with high content of natural rubber, characteristic by demanding of high level of mechanical energy input to assure wanted homogenization stage.

### Example 2:

This way of carrying out the invention describes related decompression screw for rubber compounds processing. There is sufficiently described design in example 1. The main difference is in designing of the feeding section 2, created by two flight helix. Pitch of this helix is larger or equal to the helix pitch in the melting and metering section 3. Such a decompression screw for rubber compounds processing is proper for rubber compounds extrusion, which are coming into the process with wanted, or nearly wanted state of homogenization, so there is no need to increase the homogenization state much, but only to convey it without enormous temperature increase.

## Claims

1. Decompression screw adapted for processing rubber compounds, wherein the screw core diameter in the melting and metering section (3), in a direction from feeding section (2) to the end of the melting and metering section (3), decreases and/or the pitch of the helix in the melting and metering section increases in a direction from feeding section (2) to the end of the melting and metering section (3)
**characterized in that** the ratio of the channel volume at the feeding section (2) to the channel volume at the end of the melting and metering section (3) is in the range from 0,8 to 1.

2. Decompression screw in accordance with claim 1, wherein the ratio of the channel volume at the feeding section (2) to the channel volume at the beginning of the melting and metering section (3) is larger than one.

3. Decompression screw in accordance with claims 1 and 2, wherein the feeding section (2) is created by a two flight helix or a six flight helix and the melting and metering section (3) is created by a two flight helix.

## Patentansprüche

1. Eine Dekompressionsschnecke, die zur Verarbeitung der Kautschukmischungen gestaltet ist, wobei der Schneckenkerndurchmesser in der Schmelzzone (3) und der Zone der Schmelze in der Richtung von der Schöpfzone (2) bis zum Ende der Schmelzzone (3) und der Zone der Schmelze abnehmend ist und/oder die Gewindesteigung in der Schmelzzone (3) und der Zone der Schmelze sich in der Richtung von der Schöpfzone (2) bis zum Ende der Schmelzzone (3) und der Zone der Schmelze steigend ist,
**dadurch gekennzeichnet, dass**
das Verhältnis von Volumen des Gewindes in der Schöpfzone (2) zu Volumen des Gewindes am Ende der Schmelzzone (3) und der Zone der Schmelze im Bereich von 0,8 bis 1 liegt.

2. Die Dekompressionsschnecke gemäß Anspruch 1, wobei das Verhältnis von Volumen des Gewindes der Schöpfzone (2) zu Volumen des Gewindes am Anfang der Schmelzzone (3) und der Zone der Schmelze größer als Eins ist.

3. Die Dekompressionsschnecke gemäß Anspruch 1 und 2, wobei die Schöpfzone (2) zweigängige Schneckenlinie oder sechsgängige Schneckenlinie und die Schmelzzone (3) und die Zone der Schmelze zweigängige Schneckenlinie bilden.

## Revendications

1. Vis de décompression adaptée au traitement de mélanges de caoutchouc, où le diamètre du noyau de la vis dans la zone (3) de fusion et de masse fondue dans la direction allant de la zone de prise (2) vers l'extrémité de la zone (3) de fusion et de masse fondue diminue et/ou le pas de filetage dans la zone (3) de fusion et de masse fondue augment dans le sens allant de la zone de de prise (2) vers l'extrémité de la zone (3) de fusion et de masse fondue
**caractérisé en ce que** le rapport du volume du filet de la zone de prise (2) au volume du filet à l'extrémité de la zone (3) de fusion et de masse fondue est compris entre 0,8 et 1.

2. Vis de décompression selon la revendication 1, où le rapport du volume du filet de la zone de prise (2) au volume du filet à l'extrémité de la zone (3) de fusion et de masse fondue est supérieur à un.

3. Vis de décompression selon les revendications 1 et 2, où la zone de prise (2) est formée par une hélice double ou une hélice sextuple, et la zone (3) de fusion et de masse fondue est formée par une hélice double.
